# EUROPÄISCHE PATENTSCHRIFT

(11) **EP 1 124 720 B1**
(45) Veröffentlichungstag und Bekanntmachung des Hinweises auf die Patenterteilung: **20.08.2003**
(21) Anmeldenummer: 99960833.4
(22) Anmeldetag: 28.10.1999
(51) Int. Cl.: B64C 1/40, F16L 59/02

(54) **ISOLATIONSAUFBAU ZUR INNENISOLIERUNG EINES LUFTFAHRZEUGES**
INSULATING ARRANGEMENT FOR THE INNER INSULATION OF AN AIRCRAFT
STRUCTURE ISOLANTE POUR ISOLATION INTERIEURE D'UN AERONEF

(30) Priorität: 28.10.1998 DE 19849696
(43) Veröffentlichungstag der Anmeldung: 22.08.2001
(73) Patentinhaber: Airbus Deutschland GmbH, 21129 Hamburg (DE)
(72) Erfinder: SCHMITZ, Gerhard, D-21079 Hamburg (DE); WITSCHKE, Matthias, D-21079 Hamburg (DE); MÜLLER, Rainer, D-21224 Rosengarten (DE); TURANSKI, Petra, D-27305 Süstedt (DE); LÜTJENS, Heiko, D-25421 Pinneberg (DE)
(74) Vertreter: Hansmann, Dierk, Dipl.-Ing.
(86) Internationale Anmeldenummer: DE9903438
(87) Internationale Veröffentlichungsnummer: WO00024632

(56) Entgegenhaltungen:
- FR-A- 1 022 731
- US-A- 5 240 527
- US-A- 5 398 889
- US-A- 5 472 760

## Beschreibung

Die Erfindung bezieht sich auf einen Isolationsaufbau zur Innenisolierung eines Luftfahrzeuges gemäß dem Oberbegriff des Anspruchs 1.

Es ist bekannt, daß die auf der Strukturseite befindliche Primärisolierung für gegenwärtig im Flugzeugbau eingesetzten Isoliersysteme im wesentlichen aus einem Isolier-Basismaterial und einer diese Isolierung umhüllende Folie besteht. Mit den herkömmlich eingesetzten Folien wird das Kernmaterial des Isolationssystems vor Wassereintritt geschützt. Außerdem dient die Folienumhüllung zur Befestigung des teilweise bauschigen Isoliermaterials. Diese Umhüllung wird in der Regel dermaßen dimensioniert, wonach sie möglichst geringe Gewichtsanteile besitzt. Dabei läßt sich feststellen, daß aufgrund der relativ dünnen Folie bei stattfindender Wasserdampfdiffusion durch die Folienwand der Wasserdampf in das folienumhüllte Isolierpaket eintritt. Dabei kondensiert zum Teil der Wasserdampf im Isolierpaket aus. Außerdem gelangen über Undichtigkeiten im Isolierpaket bzw. in der Folienumhüllung immer wieder diffundierende flüssige Teilchen (Wasser) in das Isolierpaket. Die Kondensation im Isolierpaket führt dazu, daß eine Ansammlung der flüssigen Teilchen (des Wassers) im Isoliermaterial erfolgt, das sich nur durch zusätzlichen Trocknungsaufwand beseitigen läßt. Diese Tatsache wirkt deshalb auch sehr unangenehm, weil durch die Wasseransammlung(en) das Isolationssytem an Gewicht zunimmt und damit zu einer unnötigen Erhöhung des Gewichtes eines Flugzeuges führt.

Patentschrift US-A-5 472 760 zeigt ein Isolierpaket zur Auskleidung der Innenseite einer Flugseugaussenwand.

Demzufolge liegt der Erfindung die Aufgabe zugrunde, einen gattungsgemäßen Isolationsaufbau derart zu gestalten, daß durch geeignete Maßnahmen (und Luftführungen) nahezu keine feuchte Luft oder sonstige feuchte Gas- oder Wasser(dampf)partikel in ein folienumhülltes Isolierpaket eindringen wird, wobei umgekehrt (bei einer derweise erfolgten Ansammlung) die angesammelte Feuchtigkeit rasch und ungehindert dem Isolierpaket entweichen soll.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beiliegenden Zeichnungen näher beschrieben. Es zeigen
- Fig. 1: einen herkömmlich eingesetzten Isolationsaufbau
- Fig. 2: den Isolationsaufbau gemäß der vorliegenden Erfindung
- Fig. 3: den Isolationsaufbau nach Fig. 2 mit der aus einer Folie bestehenden Folienumhüllung.

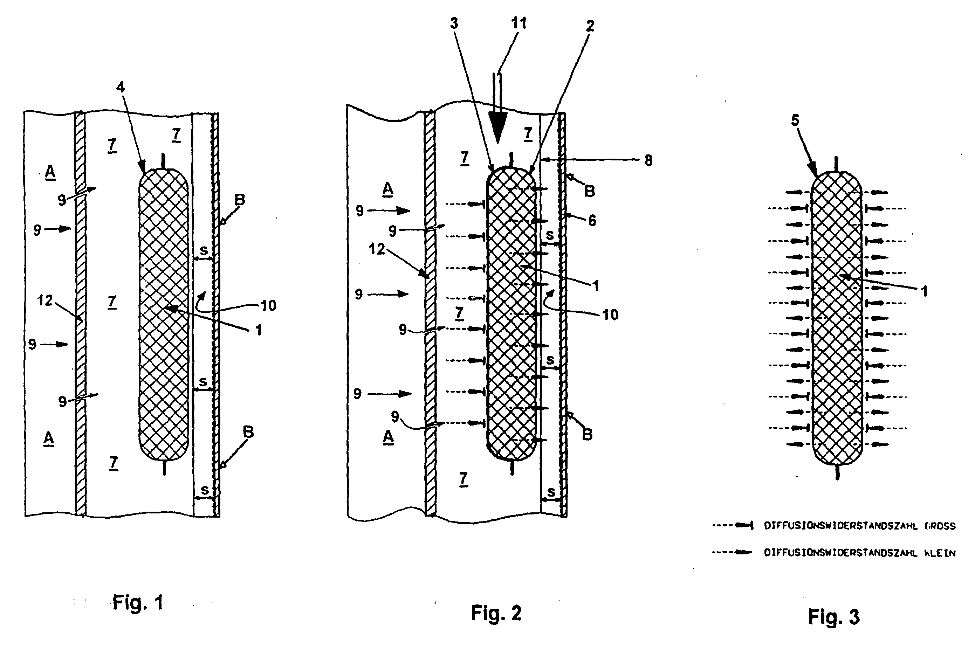

In der Fig. 1 wird ein herkömmlich eingesetzter Isolationsaufbau für ein Flugzeug gezeigt, den man bekanntermaßen innerhalb eines Zwischenraumes (Hohlraumes), der durch den Innenbereich A und den Strukturbereich B des Flugzeuges abgegrenzt ist, installiert. In Praxis wird der Zwischenraum 7 durch die (dem Strukturbereich B zugeordnete) metallene Außenhaut 6 und einer ihr beabstandet angeordneten Innenverkleidung 12, bspw. einer plattenartigen Kabinenverkleidung, gebildet. Dabei wird die Innenverkleidung 12 weitestgehend der Krümmung der Außenhaut 6 folgen, wobei in den Figuren 1 und 2 eine vertikale Stellung beider Mittel gewählt wird. Die Innenverkleidung 12 ist an bestimmten Stellen mit eingearbeiteten Schlitzen oder (sonstigen) Durchbrüchen versehen, durch die (in der Regel) relativ warme (Kabinen-)Luft 9, die einen relativ hohen Feuchtigkeitsgehalt aufweist, in den Zwischenraum eindringt. Der eigentliche Isolationsaufbau setzt sich aus einem Isolierpaket 1 und einer herkömmlichen Folienumhüllung (Folie 4) aus Kunststoff zusammen, die das einleitend erwähnte bauschige oder aus Schaumstoff bestehende Isoliermaterial (des Isolierpaketes 1) zur Befestigung umhüllt. Zwischen dem Isolierpaket und der Außenhaut 6 wird ein Luftspalt s gebildet.

Bei dem herkömmlich eingesetzten Isolationsaufbau bekannter Isolationssysteme werden Folien 4 eingesetzt, die zwar einen Flüssigwassereintritt (Eintritt von Wasser, feuchter Luft oder sonstiger Feuchtigkeit) weitgehend verhindern, jedoch aufgrund ihrer geringen Dichte bzw. der niedrigen Diffusionswiderstandszahl der Folienumhüllung nicht (wasser)dampfdicht sind. Dieser Umstand wirkt sich besonders hinderlich an dem zur warmen Kabinenseite eines Flugzeuges gerichteten Folienbereich aus. Weil eben das Vordringen der relativ warmen Luft 9 (Kabinenluft) durch die Schlitze und Aussparungen der Innenverkleidung 12 (Kabinenverkleidung) bis an die Oberfläche der Folie 4 erfolgt, kann zudem die mit hoher Luftfeuchtigkeit beladene Luft 9 durch einen zu erwartenden Wasserdampf-Diffusionsprozeß durch die Folienwand in das Isolierpaket 1 gelangen. Da während der Flugphase des Flugzeuges (vornehmlich im Reiseflug) eine starke Abkühlung der Außenhaut 6 bis zirka - 50° C (minus fünfzig Grad Celsius) geschehen wird, kann nicht vermieden werden, daß die im Wasserdampf enthaltene Feuchtigkeit (wegen Taupunktunterschreitung) auskondensiert. Die Folge wird eine Ansammlung von Feuchtigkeit und Eis im Isolierpaket 1 sein. Während der Lande- und Bodenphase des Flugzeuges wird die Temperatur der Außenhaut 6 ansteigen. Während dieser Phase wird das Eis entsprechend zu Wasser. Das Wasser, welches sich im Isolierpaket 1 befindet, wird allerdings nur über (nicht gezeigte) größere (mikroporöse) Öffnungen in der Folienwand das Isolierpaket 1 verlassen können. Nachteilig ist allerdings, daß deswegen auch die Möglichkeit besteht, das Wasser wiederum über diese Folienöffnungen in das Isolierpaket 1 eintreten wird. Die Wasserabgabe durch die Folienwand in Form von Wasserdampf ist jedoch nur zeitlich begrenzt möglich, da (in der Regel aus Gründen) der Bodenaufenthalt eines Verkehrsflugzeuges relativ gering bemessen sein wird und die herkömmlich eingesetzte Folie 4 (Folienumhüllung) für eine schnellere Abgabe von Wasserdampf aus dem Isolierpaket 1 nicht ausgelegt ist. Dieser Diffusionsvorgang wird (wie einleitend mit erwähnt) bei den bekannten - mit einer herkömmlichen Folie 4 - umhüllten Isolierpaketen 1 zur nicht gewünschten Akkumulation von Kondenswasser führen. Zusätzlich wirkende Nachteile des herkömmlichen Isolationsaufbaus wurden einleitend mit angegeben.

Im weiteren wird auf die beispielbezogenen Ausführungen nach den Figuren 2 und 3 näher eingegangen. Dem besseren Verständnis wegen wird zunächst der Isolationsaufbau nach der Fig. 3 eingehender betrachtet. Es wird ein Isolationsaufbau vorgestellt, der sich aus einem Isolierpaket 1 und einer Folie 5, die das Isolierpaket 1 nach dem Vorbild der Fig. 1 vollständig umhüllt, zusammensetzt. Auf die Anordnung dieses Isolationsaufbaus, welcher gleichermaßen der Anordnung nach der Fig. 1 entsprechen wird, wurde in dieser figurlichen Darstellung verzichtet. Allgemein wird - nach beiden Figuren 2 und 3 - eine Folienanordnung vorgestellt, die sich aus einer (nur) einzigen (das Isolierpaket 1 umhüllenden) Folie 5 oder aus zwei (das Isolierpaket 1 umhüllende) Folien 2, 3, die zu einer einzigen (nach dem Vorbild der Fig. 3 beabsichtigten) Folie 5 integriert sind, zusammensetzen wird. Beide Folienanordnungen sind allgemein mit einem von Gasen durchdringenden Folienmaterial realisiert, mit dem in Abhängigkeit der Diffusionsrichtung des Gesamtaufbaus vom feuchten Innenraum 7 zur kalten Außenhaut 6 ein unterschiedliches Diffusionswiderstandsverhalten umgesetzt wird.

Bezogen auf die Fig. 3 wird das unterschiedliche Diffusionswiderstandsverhalten der Folie 5 mit einem Folienmaterial realisiert, das von der Folienaußen- zur Folieninnenwandoberfläche eine hohe Diffusionswiderstandszahl und in umgekehrter Diffusionsrichtung (also: von der Folieninnen- zur Folienaußenwandoberfläche) eine niedrige Diffusionswiderstandszahl umsetzt. Dieser (auf die Folie 5 bezogene) Folienaufbau ist deshalb überlegenswert, weil man - unter dem Blickwinkel einer rationellen Fertigung des Isolationsaufbaus - damit den Oberflächenbereich des Isolierpaketes 1 zu allen Seitenbereichen mit einer einzigen Folie 5 (Umhüllungsfolie) aus gleichem Material umhüllen (überziehen) würde. Diese Folie 5 wird derweise funktionieren, wonach in Richtung des von ihr gänzlich umhüllten innenbefindlichen Isolierpaketes 1 die Diffusionswiderstandszahl groß ist, das heißt, es kann bis zum Isolierpaket 1 kein Wasser(dampf) vordringen. Die Folie 5 wirkt als Feuchtigkeitsblocker (als Dampfsperre). In umgekehrter Richtung weist die Folie 5 jedoch eine andere Diffusionswiderstandszahl auf, die möglichst klein (gering) ist, so daß gegebenenfalls vom Isolierpaket 1 (von der innenbefindlichen Isolierung) das akkumulierte Wasser in Form von Wasserdampf leicht aus dem Isolierpaket 1 diffundieren wird.

Zurückkommend auf die Fig. 2 wird - wie erwähnt - eine Folienumhüllung eingesetzt, die aus sich aus zwei Folien 2, 3 verschiedenenartigen Materials zusammengesetzt ist. Die beiden Folien 2, 3 werden an ihren Folienrändern fest (und nahtlos) miteinander verbunden sein, so daß man eine Folienumhüllung nach dem Vorbild der Fig. 3 erhält. Im weiteren wird - wie hinsichtlich der Fig. 1 bereits erläutert - vorausgesetzt, daß der Isolationsaufbau (nach der Fig. 2) - mit der aus einer ersten und einer zweiten Folie 2, 3 zusammengesetzte Folienumhüllung - ebenso innerhalb des erwähnten Zwischenraumes angeordnet ist, den die Innenverkleidung 12 (Kabinenverkleidung) und die (metallene) Außenhaut 6 des Flugzeuges einschließen.

Dabei wird das Isolierpaket 1, das vollständig von der (aus den beiden Folien 2, 3 zusammengesetzten) Folie 5 umgeben ist, nicht vollständig den Zwischenraum auskleiden. Dabei wird der Isolationsaufbau immer von einem (gewissen) Hohlraum - wegen einer beabsichtigten (und später erläuterten) Zuführung von konditionierter Luft 11 - umgeben sein.

Diese (aus zwei Folien 2, 3) an den Folienrändern fusionierte Folie(numhüllung) umschließt das Isolierpaket 1 vollständig und liegt letzterem derart auf, wonach die Folienoberfläche einer ersten Folie 2 überwiegend dem Stringer 8 aufliegend angeordnet ist. Die Folienaußenoberfläche einer zweiten Folie 3 steht überwiegend der zum Innenraum 7 gerichteten Oberfläche der Innenverkleidung 12 gegenüber. Überwiegend deshalb, weil bestimmte Randbereiche der Oberfläche, die auf den (die) Abschnitt(e) der Fussion beider Folien 2, 3 begrenzt sind, in Richtung des Längsverlaufes (der gestreckten Länge) der Innenverkleidung 12 bzw. des Stringers 8 weisen, von dorther auch die vorerwähnte konditionierte Luft 11 in den nehmlichen Innenbereich 7 eintreten wird.

Dabei wird die erste Folie 2 dem gestreckten Oberflächenbereich des Stringers 8 aufliegen, also beispielgewählt nichtaufliegend der Innenverkleidung 12 angeordnet sein. Da die zweite Folie 3 sich freiliegend (und nicht aufliegend der Innenverkleidung 12) im Innenbereich 7 befindet, wird die zweite Folie 3 weitestgehend von der durch den Innenbereich 7 strömenden konditionierten Luft 11 umgeben sein.

Erwähnt wird an dieser Stelle, daß mehrere Abstandhalter zwischen der Außenhaut 6 und dem Isolierpaket 1 bzw. zwischen der Stringerkante (des Stringers 8) und dem Isolierpaket 1 angeordnet sind. Hierbei wird ein Luftspalt s gebildet.

Die erste Folie 2 ist mit einem Folienmaterial realisiert, welches in Diffusionsrichtung des durch die Folienwand diffundierenden Gases von der Folieninnen- zur Folienaußenwandoberfläche eine niedrige Diffusionswiderstandszahl umsetzt. Unter dem Gas wird - wie vorher angegeben - relativ warme Luft, die mit hoher Feuchtigkeit beladen ist, welche durch die Schlitze und Durchbrüche der Innenverkleidung 12 in den Innenbereich 7 einströmt, verstanden.

Die zweite Folie 3 ist mit einem Folienmaterial realisiert, welches in Diffusionsrichtung des durch die Folienwand diffundierenden Gases von der Folienaußen- zur Folieninnenwandoberfläche eine hohe Diffusionswiderstandszahl umsetzt.

Nach allen Ausführungen des beschriebenen Isolieraufbaus ist das folienumhüllte Isolierpaket 1 mit einem aus Polyphenylensulfid (Kurzbezeichnung: "PPS") bestehenden Isoliermaterial realisiert. Letzteres ist von der als Kunststofffolie ausgeführten einzelnen Folie 5 (nach der Fig. 3) oder von der Folienanordnung, die aus zwei verschiedenartigen Folien 2, 3 (nach der Fig. 2) besteht und zu einer einzigen Folie 5 zusammengesetzt sind, umhüllt. Dabei realisiert (realisieren) das (die) Folienmaterial(ien) der (ggf. aus zwei verschiedenartigen Folienmaterialien zusammengesetzte) Folie 5 (gemäß dem Folienaufbau nach den Figuren 2 und 3) - richtungsabhängig der stattfindenden Diffusion durch die Folienwand - eine unterschiedliche Diffusionswiderstandszahl, wie vorher beschrieben. Ihre räumliche Anordnung innerhalb des Innenbereiches 7 (bzw. des Zwischenraumes) ist an der Stelle ihrer Auflagefläche dem Flächenverlauf der (zur Innenverkleidung 12 gerichteten) Oberfläche des Stringers 8 oder (aber auch) dem Flächenverlauf der inneren Oberfläche der Außenhaut 6 angepaßt.

Abschließend wird resümiert, daß die nach den Figuren 2 und 3 unterschiedlichen Folien 2, 3, 5 (Folienumhüllungen) aus verschiedenartigem Folienmaterial bestehen, damit eine Akkumulation von Kondenswasser im folienumhüllten Isolierpaket 1 ausgeschlossen wird. Eine dem Innenbereich A sich zuwendende zweite Folie 3 (nach der Fig. 2) wird ein Folienmaterial aufweisen, daß in Diffusionsrichtung des Mediums [von der Folienaußen- zur Folieninnen(wand)oberfläche] eine hohe Diffusionswiderstandszahl umsetzt. Das hat den Vorteil, daß die mit (relativ) hoher Feuchtigkeit beladene Luft, welche über Schlitze und Durchbrüche vom Innenbereich A (beispielsweise von der Passagierkabine eines Flugzeuges) in den Zwischenbereich (in den Innenbereich 7) einströmt, nicht direkt in die (der Flugzeug-Rumpfstruktur nahe gelegene) Primärisolierung eindiffundieren kann. Bei dem zur Außenhaut 6 (als Bestandteil der Flugzeug-Rumpfstruktur) gerichteten Bereich des Isolationsaufbaus wird eine erste Folie 2 (nach der Fig. 2) eingesetzt, die diffusionsoffen ist und in Diffusionsrichtung des Mediums von der Folieninnen- zu Folienaußen(wand)oberfläche eine geringe Diffusionswiderstandszahl aufweist.

Das hat den Vorteil, daß vor allem bei warmen Bodenzeiten (Bodenphase eines Flugzeuges) Flüssigwasser, welches sich durch Kondensation im Isolierpaket 1 angesammelt hat, als Wasserdampf (relativ) ungehindert und damit schnell das Isolierpaket 1 verlassen kann. Damit wird eine Trocknung des Isolierpaketes 1 angestrebt. Voraussetzung ist dabei, daß zwischen der Außenhaut 6 und der ersten Folie 2 ein ausreichender Luftspalt s vorliegt. Der Stringer 8, auf dem die Primärisolierung aufliegt, funktioniert dabei als Distanzstück zur Außenhaut 6. Zusätzliche Halter werden dafür sorgen, daß der Luftspaltbereich 10 zwischen der Außenhaut 6 und dem Isolationsaufbau (dem folienumhüllten Isolierpaket 1) eingehalten bzw. ggf. vergrößert wird. Es werden demnach zwei wesentliche Effekte gegenüber der herkömmlich eingesetzen Flugzeugisolierung erreicht:
a) Der Wasserdampf, welcher vom Innenbereich A (von der Passagierkabine stammend) in den Zwischenraum (Innenbereich 7) gelangen kann, wird von der als Dampfsperre wirkenden zweiten Folie 3 vor dem Eindringen (vor dem Eindiffundieren) in das Isolierpaket 1 gehindert;
b) Das Flüssigwasser, welches sich im Isolier(ungs)paket 1 trotzdem ansammelt, kann beispielsweise während der warmen Bodenphase eines Flugzeuges durch die diffusionsoffene erste Folie 2 in Form von Wasserdampf das Isolierpaket 1 verlassen. Damit wird eine Trocknung der Primärisolierung unterstützt und damit die Akkumulation von Kondenswasser im Isolationsystem verhindert.

Beide Ausführungen des vorgestellten Isolationsaufbaus nach den Figuren 2 und 3 besitzen den Vorteil, daß man mit konditionierter Luft, die man außerdem mittels einem (einer) aktiven Klimagerät (Klimaeinrichtung) dem betreffenden Isolationsaufbau zuführt, einen zusätzlichen Trockeneffekt auch während des Fluges (im Reiseflug eines Flugzeuges) erreicht, da insbesondere der Folienaufbau nach der Fig. 3 dafür sorgen wird, daß das Isolierpaket 1 überhaupt austrocknen kann. Insgesamt werden mit den vorgestellten Isolieraufbauten folgende Vorteile erreicht:
a) Es wird weniger Wasserdampf in das Isolierpaket 1 eintreten, so daß auch weniger Kondensation im Isolierpaket 1 vorliegt;
b) Kondensationswasser, daß sich einmal im Isolierpaket 1 angesammelt hat, kann wieder aus der Isolierung in Form von Wasserdampf entweichen;
c) Das Isolierpaket 1 kann nach alledem leichter trocknen;
d) Es kommt nicht mehr zur Akkumulation von Kondenswasser im Isolierpaket 1,
e) Dadurch, daß weniger Wasser in der Isolierung vorliegt, erhöht sich die Lebensdauer des Isolieraufbaus bzw. des Isoliersystems;
f) Es wird im Luftfahrzeug (bspw. im Flugzeug) entsprechendes Gewicht gespart, wodurch die Flugleistung erhöht wird;
g) Die vorgeschlagenen Maßnahmen lassen sich ohne besonderen Aufwand realisieren. Das gilt auch für die Nachrüstung von im Service befindlichen Luftfahrzeugen (Flugzeugen);
h) Sollte trotzdem der Einsatz von einem Trockensystem im Luftfahrzeug (im Flugzeug) vorgesehen sein, um die Struktur zutrocknen, dann läßt sich ein geschilderter Isolationsaufbau nach den Figuren 2 und 3 ebenso wirksam wie notwendig installieren.

## Patentansprüche

1. Isolationsaufbau zur Innenisolierung eines Luftfahrzeuges, bestehend aus einem Isolierpaket (1), das von einer Folie (5) umhüllt ist und innerhalb eines Zwischenraumes (7), den eine Innenverkleidung (12) und eine Außenhaut (6) des Luftfahrzeuges einschließen, einsetzbar ist,
**dadurch gekennzeichnet, dass** das isolierpaket (1), das vollständig von der Folie (5) umgeben ist, in eingesetztem Zustand nicht vollständig den Zwischenraum (7) auskleidet und die Folie (5), die mit einem die Diffusion von Gasen zulassenden Folienmaterial realisiert ist, von der Folienaußen- zur Folieninnenwandoberfläche oder in umgekehrter Richtung je nach Diffusionsrichtung mit unterschiedlichem Diffusionswiderstand als Außenhaut einer Innenisolierung einbezogen ist

2. **Isolationsaufbau** nach Anspruch 1, **dadurch gekennzeichnet, daß** dem Folienmaterial der Folie (5) ein derartiges Diffusionsverhalten zugeordnet ist, wonach es von der Folienaußen- zur Folieninnenwandoberfläche eine hohe Diffusionswiderstandszahl und in umgekehrter Diffusionsrichtung von der Folieninnen- zur Folienaußenwandoberfläche eine niedrige Diffusionswiderstandszahl umsetzt.

3. **Isolationsaufbau** nach Anspruch 1, **dadurch gekennzeichnet, daß** die Folie (5) aus wenigstens zwei verschiedenenartigen Folien (2, 3), die an den Folienrändern fest miteinander verbunden sind, zusammengesetzt ist, wobei die einzelne Folie (2, 3) dem Isolierpaket (1) abschnittsweise anliegend ist.

4. **Isolationsaufbau** nach Anspruch 3, **dadurch gekennzeichnet, daß** eine erste Folie (2) mit einem Folienmaterial realisiert ist, welches in Diffusionsrichtung des Gesamtaufbaus auf der zur Außenhaut (6) zugewandten Seite des Isolierpaketes (1) eine niedrige Diffusionswiderstandszahl umsetzt.

5. **Isolationsaufbau** nach Anspruch 3, **dadurch gekennzeichnet, daß** eine zweite Folie (3) mit einem Folienmaterial realisiert ist, welches in Diffusionsrichtung des Gesamtaufbaus auf der zur Innenverkleidung (12) zugewandten Seite des Isolierpaketes (1) eine hohe Diffusionswiderstandszahl umsetzt.

6. **Isolationsaufbau** nach den Ansprüchen 1 bis 3, **dadurch gekennzeichnet, daß** die Folie (5) oder (2) einem Stringer (8), der den Zwischenraum in einen Innenbereich (7) und einen Luftspaltbereich (10) unterteilt, wonach zwischen dem Stringer (8) und der Außenhaut (6) ein Luftspalt (s) vorhanden ist, aufliegt.

7. **Isolationsaufbau** nach Anspruch 6, **dadurch gekennzeichnet, daß** mehrere Abstandhalter, mit denen der Stringer (8) gegenüber der Außenhaut (6) abgestützt ist, innerhalb des Luftspaltes (s) angeordnet sind.

8. **Isolationsaufbau** nach den Ansprüchen 2 und 3,
**dadurch gekennzeichnet, daß** die Innenverkleidung (12) mit mehreren Schlitzen und / oder Durchbrüchen versehen ist, die zum Durchdringen einer außerhalb des Innenraumes (7) befindlichen relativ warmen und mit hoher Feuchtigkeit beladenen Luft (9) bis an die Folienaußenfläche der Folie (5) oder (3), die sich der Innenverkleidung (12) zuwendet, vorgesehen sind.

9. **Isolationsaufbau** nach den Ansprüchen 3 bis 6,
**dadurch gekennzeichnet, daß** die Folienaußenoberfläche der ersten Folie (2) überwiegend dem Stringer (8) aufliegend angeordnet ist und die Folienaußenoberfläche der zweiten Folie (3) überwiegend der zum Innenraum (7) gerichteten Oberfläche der Innenverkleidung (12) gerichtet ist.

10. **Isolationsaufbau** nach einem der Ansprüche 1 bis 3,
**dadurch gekennzeichnet, daß** das Isolierpaket (1) mit einem aus Polyphenylensulfid (PPS) bestehenden Isoliermaterial realisiert ist, das von der als Kunststofffolie ausgeführten Folie (2, 3, 5) umhüllt ist, dessen Lage im Innenraum (7) dem Flächenverlauf der Außenhaut (6) angepaßt ist.

11. **Isolationsaufbau** nach den Ansprüchen 3 bis 5, **dadurch gekennzeichnet, daß** die erste Folie (2) aus eine dünne Folie und die zweite Folie (3) eine dicke Folie ist.

12. **Isolationsaufbau** nach Anspruch 6, **dadurch gekennzeichnet, daß**, wobei die stringeraufliegende Folie (5) oder (2) nichtaufliegend der Innenverkleidung (12) angeordnet ist, wodurch ein zusätzlicher Trocknungseffekt des Gesamtaufbaus durch eine durch den Innenraum (7) strömende konditionierte Luft (11) von einem Klimagerät erreicht wird.

## Claims

1. **Insulating structure for the internal insulation of an aircraft**, the said insulating structure consisting of an insulating pack (1) which is enveloped by a film (5) and can be inserted within an intervening space (7) enclosed by an inner lining (12) and an outer skin (6) of the aircraft, **characterised in that** the insulating pack (1), which is completely surrounded by the film (5), does not completely line the intervening space (7) when in the inserted condition, and the film (5), which is produced using a film material which permits the diffusion of gases, is incorporated, with a diffusion resistance which differs from the outer wall surface to the inner wall surface of the film or in the reverse direction, according to the direction of diffusion, as the outer skin of an inner insulation.

2. **Insulating structure** according to claim 1, **characterised in that** there is associated with the material of the film (5) a diffusion behaviour such that it turns over a high coefficient of diffusion resistance from the outer wall surface to the inner wall surface of the film, and a low coefficient of diffusion resistance in the reverse direction of diffusion from the inner wall surface to the outer wall surface of the film.

3. **Insulating structure** according to claim 1, **characterised in that** the film (5) is composed of at least two films (2, 3) of different types which are fixedly connected to one another at the edges of the films, the individual film (2, 3) resting against the insulating pack (1) in certain sections.

4. **Insulating structure** according to claim 3, **characterised in that** a first film (2) is produced using a film material which, in the direction of diffusion of the overall structure, turns over a low coefficient of diffusion resistance on that side of the insulating pack (1) which faces towards the outer skin (6).

5. **Insulating structure** according to claim 3, **characterised in that** a second film (3) is produced using a film material which, in the direction of diffusion of the overall structure, turns over a high coefficient of diffusion resistance on that side of the insulating pack (1) which faces towards the inner lining (12).

6. **Insulating structure** according to claims 1 to 3, **characterised in that** the film (5) or (2) rests on a stringer (8) which subdivides the intervening space into an inner region (7) and an air-gap region (10), according to which an air gap (s) is present between the stringer (8) and the outer skin (6).

7. **Insulating structure** according to claim 6, **characterised in that** a number of spacers, with the aid of which the stringer (8) is supported in relation to the outer skin (6), are disposed inside the air gap (s).

8. **Insulating structure** according to claims 2 and 3, **characterised in that** the inner lining (12) is provided with a number of slits and/or openings which are provided for the penetration of relatively warm air, which is located outside the inner space (7) and is laden with a high level of moisture, as far as the outer face of the film (5) or (3) which faces towards the inner lining (12).

9. **Insulating structure** according to claims 3 to 6, **characterised in that** the outer surface of the first film (2) is disposed in a manner predominantly resting on the stringer (8), and the outer surface of the second film (3) is directed predominantly towards that surface of the inner lining (12) which is directed towards the inner space (7).

10. **Insulating structure** according to one of claims 1 to 3, **characterised in that** the insulating pack (1) is produced using an insulating material which consists of polyphenylene sulfide (PPS) and is enveloped by the film (2, 3, 5) designed as plastic film, and whose position in the inner space (7) is adapted to the surface profile of the outer skin (6).

11. **Insulating structure** according to claims 3 to 5, **characterised in that** the first film (2) consists of a thin film and the second film (3) is a thick film.

12. **Insulating structure** according to claim 6, **characterised in that** the film (5) or (2) resting on the stringer is disposed in a manner not resting on the inner lining (12), as a result of which an additional drying effect for the overall structure is achieved by conditioned air (11) flowing through the inner space (7) from an air-conditioning apparatus.

## Revendications

1. Structure isolante pour l'isolation intérieure d'un aéronef, constituée d'un package isolant (1) entouré par une pellicule (5) et insérable dans un espace intermédiaire (7) compris entre un revêtement interne (12) et une paroi externe (6) de l'aéronef, et **caractérisée en ce que**, à l'état monté, le package isolant (1) entièrement entouré par la pellicule (5) ne recouvre pas entièrement l'espace intermédiaire (7) et **en ce que** la pellicule (5) conçue avec un matériel pour feuilles autorisant la diffusion de gaz a été prévue comme paroi externe d'une isolation intérieure, avec une résistance diffusée variable, de la surface externe de la pellicule jusqu'à la surface de la paroi interne de la pellicule ou dans le sens inverse, selon la direction de diffusion.

2. Structure isolante selon la revendication 1, **caractérisé en ce que** un comportement de diffusion de ce type a été attribué au matériau de pellicule de la pellicule (5), un taux de résistance diffusée important étant converti de la surface externe de la pellicule jusqu'à la surface de la paroi interné de la pellicule et un taux de résistance diffusée faible étant converti de la surface interne de la pellicule jusqu'à la surface de la paroi externe de la pellicule.

3. Structure isolante selon la revendication 1, **caractérisée en ce que** la pellicule (5) est composée d'au moins deux pellicules (2,3) différentes reliées fermement l'une à l'autre aux bords de pellicules, chaque pellicule (2,3) reposant par sections contre le package isolant (1).

4. Structure isolante selon la revendication 3, **caractérisée en ce que** une première pellicule (2) a été conçue avec un matériau de pellicule convertissant, dans la direction de la diffusion de la structure globale, sur la face du package isolant (1) orientée vers la paroi externe (6), un taux de résistance diffusée réduit.

5. Structure isolante selon la revendication 3, **caractérisée en ce que** une deuxième pellicule (3) a été conçue avec un matériau de pellicule convertissant, dans la direction de la diffusion de la structure globale, sur la face du package isolant (1) orientée vers la paroi interne (12), un taux de résistance diffusée élevé.

6. Structure isolante selon les revendications 1 à 3, **caractérisée en ce que** la pellicule (5) ou (2) repose sur une serre (8) divisant l'espace intermédiaire en une zone interne (7) et un segment d'entrefer (10), un espace d'air (S) étant présent entre la serre (8) et la paroi externe (6).

7. Structure isolante selon la revendication 6, **caractérisée en ce que** plusieurs écarteurs soutenant l'entrefer (8) par rapport à la paroi externe (6) ont été disposés à l'intérieur de l'espace d'air (s).

8. Structure isolante selon les revendications 2 et 3, **caractérisée en ce que** le revêtement interne (12) est doté de plusieurs glissières et / ou percées destinées à faire pénétrer un air (9) très humide et relativement chaud situé à l'extérieur de l'espace interne (7) jusque contre la surface externe de la pellicule (5) ou (3) orientée vers le revêtement interne.

9. Structure isolante selon les revendications 3 à 6, **caractérisée en ce que** la surface externe de la première pellicule (2) repose principalement sur la serre (8) et la surface externe de la deuxième pellicule (3) est orientée principalement vers la surface du revêtement interne (12) orientée vers l'espace interne (7).

10. Structure isolante selon une des revendications 1 à 3, **caractérisée en ce que** le package isolant (1) a été conçu avec un matériau isolant constitué de sulfure de polyphénylène (PPS), entouré par une pellicule (2, 3, 5) en forme de pellicule synthétique et présentant, dans l'espace interne (7), une situation adaptée à l'extension superficielle de la paroi externe (6).

11. Structure isolante selon les revendications 3 à 5, **caractérisée en ce que** la première pellicule (2) est une pellicule fine et la deuxième (3) une pellicule épaisse.

12. Structure isolante selon la revendication 6, **caractérisé en ce que** la pellicule (5) ou (2) reposant sur la serre n'a pas été disposée sur le revêtement interne (12), permettant un effet de séchage supplémentaire de la structure totale à partir d'un appareil de climatisation et via un air conditionné (11) s'écoulant à travers l'espace interne (7).
